# EUROPEAN PATENT APPLICATION

(11) **EP 4 075 011 A1**
(43) Date of publication of application: **19.10.2022**
(21) Application number: 21168850.2
(22) Date of filing: 16.04.2021
(51) Int. Cl.: F16F 9/32, F16F 13/00, B62K 25/08, F16F 1/12

(54) **DAMPING CARTRIDGE SYSTEM FOR VEHICLE FRONT FORKS**

(71) Applicant: Öhlins Racing AB, 194 27 Upplands Väsby (SE)
(72) Inventor: Hansson, Erik, 194 27 Upplands Väsby (SE)
(74) Representative: AWA Sweden AB

(57) **Abstract**

The present disclosure relates to a damping cartridge system (1) configured to be arranged in a leg (100) of a vehicle front fork, the damping cartridge system (1) comprising: an inner cartridge tube (2) configured to be coupled to a first part (101) of the vehicle front fork leg (100), a piston head (5) coupled to a second part of the vehicle front fork leg configured to be moveable relative the first part of the front fork leg, the piston head (5) configured to be moveable inside the inner cartridge tube (2) between a first position and a second position, an outer cartridge tube (3) sized and adapted to at least partly house the inner cartridge tube (2), the outer cartridge tube (3) comprises a plurality of ridges (311) and grooves (312) arranged side-by-side along the axial direction of the outer cartridge tube (3), thereby forming a corrugated portion (31) for distributing radial forces acting on the damping cartridge system (1).

## Description

### Technical Field

The present disclosure relates to a damping cartridge system configured to be arranged in a vehicle front fork and a vehicle comprising a vehicle front fork in which a damping cartridge system is arranged.

### Background

In the prior art, cartridge systems for vehicle front forks typically extend through a helical spring aligned along the longitudinal direction of a leg of the front fork, which helical spring is configured to counteract the movement of a piston head within the vehicle front fork leg. Due to the desire to provide compact solutions, the interaction between the cartridge system and this helical spring may pose problems. The inner diameter of the spring is limited by the desired damping characteristic for a given front fork design. Therefore, it is of interest to reduce the outer diameter of the cartridge system as much as possible. As an example, a motocross front fork leg may have a length of 950 mm and a stroke length of around 300 mm. When such a motocross front fork leg has an outer diameter of 48 mm, the helical spring inner diameter is consequently about 33 mm. This limits the diameter of the cartridge system able to fit within said helical spring. When considering wear protection to be arranged on the outside of the cartridge system for protection against the helical spring, the diameter of the cartridge system is limited even further.

Cartridge systems designed for compact solutions may be subjected to strong radial forces acting on it whenever the vehicle front fork makes ground impact at an angle. This is often the case for motocross type front forks. This is conventionally solved by ensuring the cartridge system is designed with a sufficient diameter so as to be able to absorb and distribute these forces. However, in contrast with the above-mentioned problem, this reduces the size of the helical spring and thus the damping characteristics that can be realized by solutions of the prior art.

### Summary

It is an object of the present invention to provide an improved solution that alleviates the mentioned drawbacks with present solutions.

In particular, a first object of the invention is to provide a more compact cartridge system for a vehicle front fork leg that allows for improved damping characteristics compared to conventional solutions arranged in the same vehicle front fork leg. This object is solved by the invention according to claim 1.

A second object of the invention is to provide a cartridge system for a vehicle front fork leg that may distribute radial forces acting on the vehicle front fork leg at ground impact in a more satisfying manner. This is also solved by the invention according to claim 1.

A third object of the invention is to provide a cartridge system for a leg of a motocross front fork. This is also solved by the invention according to claim 1.

According to a first aspect, a damping cartridge system configured to be arranged in a vehicle front fork leg is provided. The damping cartridge system comprises: an inner cartridge tube configured to be coupled to a first part of the vehicle front fork leg, a piston head coupled to a second part of the vehicle front fork leg configured to be moveable relative the first part of the front fork leg, the piston head configured to be moveable inside the inner cartridge tube between a first position and a second position, an outer cartridge tube sized and adapted to at least partly house the inner cartridge tube, wherein the outer cartridge tube comprises a plurality of ridges and grooves arranged side-by-side along the axial direction of the outer cartridge tube, thereby forming a corrugated portion for distributing radial forces acting on the damping cartridge system.

The corrugated portion defines a first region that facilitates bending deformation to occur to a degree in response to radial forces acting on the cartridge system, for instance due to the vehicle front fork leg making ground impact. This is due to the plurality of ridges and grooves arranged side-by-side along the axial direction of the outer cartridge tube. The depth of the grooves as measured from the tip of the ridges, as well as the spacing between adjacent ridges, may be adapted in order to provide certain bending deformation characteristics. The radial distances to each of the tips of the plurality of ridges from a center axis of the corrugated portion may be substantially the same.

The corrugated portion allows for bending deformation to occur in a predetermined and controlled manner. This may remove and/or reduce concentrated stress in parts of the cartridge system located away from the corrugated portion. The outer cartridge tube may define a second region located away from the corrugated portion along which the helical spring can reside and operate during use. Since the first region is adapted for facilitating managing the radial forces subjected to the cartridge system, the second region may be reduced in cross-section. This may provide a more compact cartridge system with increased space for the helical spring, thereby allowing an increased flexibility with regards to the selection of helical springs to be used.

Thus, the cartridge system when arranged in a vehicle front fork leg may enable improved damping characteristics compared to conventional solutions arranged in the same vehicle front fork leg, thereby solving the first object of the invention.

Moreover, the cartridge system may enable distribution of radial forces acting on the vehicle front fork leg at ground impact in a more satisfying manner, thereby solving the second object of the invention.

Also, the cartridge system herein disclosed is in particular suitable for use in motocross front fork leg due to its design allowing for compact form factor while maintaining both durability and allowing for desirable damping characteristics to a greater degree, thereby solving the third object of the invention.

The axial length of the corrugated portion may be adapted to meet various deformation criteria, in particular bending deformation criteria. The ratio between the length of the corrugated portion to the overall length of the outer cartridge tube may for instance be about 10% to 60% or more, preferably about 40% to 60%. Alternatively, the ratio above may be specified as the values above in relation to the axial length of the inner cartridge tube instead.

The groove depth as measured from the tip of adjacent ridges may be about 0.1-8 mm depending on the maximal degree of predetermined bending deformation the corrugated portion is being dimensioned for.

The inner cartridge tube may have a substantially cylindric shape. The outer cartridge tube may have a substantially cylindric shape. Both the inner cartridge tube and the outer cartridge tube may have a substantially cylindric shape. They may be coaxial. The portion of the outer cartridge tube defining the corrugated portion may be spaced away from the inner cartridge tube so that a gap between the outer and inner cartridge tube is formed.

The inner cartridge tube may define an inner cavity in which the piston head is configured to move.

By "coupled to", it may mean that a component A and a component B are directly connected or that they are indirectly connected. It may further mean that component A and component B are fixedly connected to each other, i.e. they are not moveable relative each other, or flexibly connected to each other, i.e. they are moveable a predetermined distance relative each other.

In particular, the piston head may be coupled to the second part of the vehicle front fork by means of a piston rod. The piston head may divide the cavity of the inner cartridge tube into two chambers, a compression chamber and a rebound chamber. The chamber corresponding to the compression chamber may be the chamber reducing in size when the piston head moves in a direction into the inner cartridge tube. During use, this corresponds to when the vehicle front fork is being compressed. The chamber corresponding to the rebound chamber may be the chamber reducing in size when the piston head moves in a direction out of the inner cartridge tube. During use, this corresponds to when the vehicle front fork is being extended.

Moreover, by "compression stroke", it may be meant the movement the piston head makes at it moves towards the compression chamber. Also, by "rebound stroke", it may be meant the movement the piston head makes when it moves towards the rebound chamber.

Moreover, in the context of the application, "arranged in series" should be understood as an object A and an object B being arranged such that they are fluidly coupled to each other. The wording "fluidly coupled" should be understood as an object A being coupled to an object B by any coupling means such as a channel, pipe, hose or other connection means through which a fluid may flow. The coupling may be direct coupling, or it may be indirect coupling. Also, in the context of the application, an object A being "fluidly arranged between" objects B and C should be understood as that the placing of object A is between object B and object C, in the fluid path running between objects B and C. Thus, object A does not need to be "fluidly arranged" as in floating.

The first part and the second part of the vehicle front fork may be two cylindric members engaging with each other in a telescopic manner. They may be arranged to form a telescopic leg of the vehicle front fork.

The inner cartridge tube may be adapted to be in fluid communication with a fluid reservoir. The fluid reservoir may be in fluid communication with the compression chamber and/or the rebound chamber. The fluid reservoir may be adapted to be attached to an axial end of the cartridge system by means of attaching means. The fluid reservoir may be attached to one end of the inner cartridge tube such that fluid communication is established via one axial end opening of said inner cartridge tube. Said axial end opening may be the axial end opening opposite the axial end opening through which the piston head enters the inner cartridge tube. The fluid reservoir may comprise a fluid chamber for retaining fluid, which fluid chamber is substantially cylindrical in shape. The fluid reservoir may form a part of the cartridge system such that the fluid chamber is arranged substantially coaxially with the inner cartridge tube.

According to one embodiment, at least two grooves of the corrugated portion have groove depths which are different. By this, the corrugated portion may be defined by a first region and an at least second region of plurality of ridges characterized by different groove depths. Thus, the first and the at least second region may allow bending deformation to occur in predetermined steps, by which more controlled absorption and distribution of radial forces may be realized. Thus, this may allow for a more durable cartridge system.

According to one embodiment, the groove depths of the corrugated portion varies along the axial direction of the corrugated portion. The groove depths may successively increase towards an intermediate region of the corrugated portion along a direction either from a first axial end of the corrugated portion, wherein said first axial end is facing away from a center portion of the cartridge system, or from a second axial end of the corrugated portion corresponding to the opposite axial end to said first axial end of the corrugated portion. The groove depths may successively remain constant along either said directions from said intermediate region. The groove depths may alternatively successively decrease or increase from said intermediate region along either said directions. The intermediate region may be axially offset from an axial midpoint of the corrugated portion.

According to one embodiment, ridge distances between neighboring ridges of the corrugated portion varies along the axial direction of the corrugated portion. By this, deformation characteristics, in particular bending deformation characteristics, of the corrugated portion may be further adapted. A ridge distance between neighboring ridges of the corrugated portion may be defined in terms of a ratio to the groove depth between said neighboring ridges of the corrugated portion. The ratio between ridge distance and groove depth may be about 10-500%. The ratio may alternatively be about 10-50%, 50-100%, 100-150%, 150-200%, 250-300%, 300-350%, 350-400%, 400-450%, or 450-500%. The ratio may vary along the axial length of the corrugated portion. The ratio may be higher towards the respective axial ends of the corrugated portion and have a minimum value at an intermediate region of corrugated portion between said axial ends of the corrugated portion.

According to one embodiment, wherein the corrugated portion comprises a helical groove axially extending along the axial direction of the corrugated portion and/or independent radial grooves arranged side-by-side along the axial direction of the corrugated portion. By having a helical groove, the deformation characteristics, in particular bending deformation characteristics, may be more controlled. A helical groove may be beneficial in that the corrugated portion may distribute radial forces in a more efficient manner. Moreover, by having a helical groove, the corrugated portion may be less inclined to deform in an axial direction. Independent radial grooves may also be of interest for the purpose of distributing radial forces.

According to one embodiment, wherein the wall thickness of the corrugated portion is substantially even along the axial direction of the corrugated portion. By this, the mechanical stress may be more evenly distributed throughout the corrugated portion.

According to one embodiment, wherein the wall thickness of the corrugated portion is about 0.5-2.5 mm. By this, the corrugated portion may be sufficiently flexible yet durable without adding to much weight.

According to one embodiment, wherein the corrugated portion is arranged such that the piston head, when in the first position, is located within the corrugated portion, and, when in the second position, is located fully outside the corrugated portion. By this, the corrugated portion is located appropriately at a location wherein much of mechanical stress occur, thus it can help distributing radial forces to mitigate this mechanical stress.

According to one embodiment, wherein the corrugated portion is made of a first material comprising titanium, the first material preferably further comprising 2-3% vanadium and/or 2.5-3.5% aluminum. By using a material that is at least comprising titanium, the corrugated portion is made of a strong material, which is an advantage for the purpose of absorbing and distributing radial forces to reduce mechanical stress. Moreover, titanium is a lightweight material which is beneficial in particular for motocross type front forks wherein it is favorable to reduce weight as much as possible. Using titanium in the first material may be beneficial in order to enhance the strength of the corrugated portion, allowing it to be thinner and/or have a smaller outer diameter. By further comprising 2-3% vanadium and/or 2.5-3.5% aluminum, the beneficial properties of the material may be enhanced further.

According to one embodiment, the whole outer cartridge tube is made from the first material comprising titanium. This may be beneficial in order to enhance the strength of the outer cartridge tube, allowing it to be thinner and/or have a smaller outer diameter. By having a smaller outer diameter, more space may be allocated to a helical spring and optionally spring protection means arranged on the outside of the outer cartridge tube.

According to one embodiment, the inner cartridge tube is made from a second material comprising aluminum, the second material preferably comprising 95-98% aluminum. By this, the inner cartridge tube may be of a sufficiently strong and durable material that is also cost effective.

According to one embodiment, the outer cartridge tube comprises a spring receiving portion axially displaced from the corrugated portion, said spring receiving portion adapted for receiving the helical spring when arranged to the cartridge system, wherein the corrugated portion has a first diameter and the spring receiving portion has a second diameter smaller than said first diameter. By this, the spring receiving portion may define together with the vehicle front fork leg a large space for receiving the helical spring. The outer diameter of the corrugated portion may be about the same or slightly less than the inner diameter of the first part of the vehicle front fork leg. The spring receiving portion may have a substantially cylindric shape. The spring receiving portion may be provided without a corrugated portion. Alternatively, the spring receiving portion may be provided with a corrugated portion for distributing radial forces also. The first diameter may be about 35-45 mm. The second diameter may be about 28-35 mm.

According to one embodiment, the outer cartridge tube comprises a conical portion connecting the corrugated portion and the spring receiving portion. By such a structural transition between the corrugated portion and a spring receiving portion, mechanical stress may be further reduced.

According to one embodiment, the cartridge system further comprises spring protection means arranged on the outside of the spring receiving portion. The spring protection means may be a coating of a durable material, for instance rubber such as polyethylene (PE). The spring protection means may encompass at least a part of the spring receiving portion, such that the helical spring is prevented from coming in contact with said encompassed part of the spring receiving portion. By this, the amount of wear particles inherent to the spring rubbing against the cartridge may be lessened thus reducing the wear of the front fork telescope.

According to a second aspect of the invention, a vehicle is provided. The vehicle comprises: a vehicle front fork, a damping cartridge system according to the first aspect or any embodiments thereof arranged in a leg of said vehicle front fork, and a helical spring configured to counteract the movement of the piston head when moved between the first and second position, said helical spring arranged such that the spring receiving portion of the outer cartridge tube is arranged at least partly inside said helical spring.

The vehicle may be a motocross type vehicle. The motocross type vehicle may have a front fork leg of a predetermined standard length, e.g. 950 mm with a stroke length of around 300 mm.

Alternatively, the front fork leg may have a predetermined length of 800-1100 mm with a stroke length of 250-350 mm.

The front fork leg may have an outer diameter of 45-55 mm.

The helical spring may an inner diameter of 30-35 mm.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Fig. 1A shows a side view of the damping cartridge system according to one embodiment of the invention;
Fig. 1B shows a cross-sectional view of the damping cartridge system according to one embodiment of the invention;
Fig. 2 shows a side view and a cross-sectional view of the inner and outer cartridge tube according to one embodiment of the invention;
Fig. 3A shows a cross-sectional view of a portion of the inner and outer cartridge tube according to one embodiment of the invention;
Fig. 3B shows a zoomed in view of the corrugated portion of the outer cartridge tube according to one embodiment of the invention;
Fig. 4 shows a vehicle front fork leg for a vehicle according to one embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

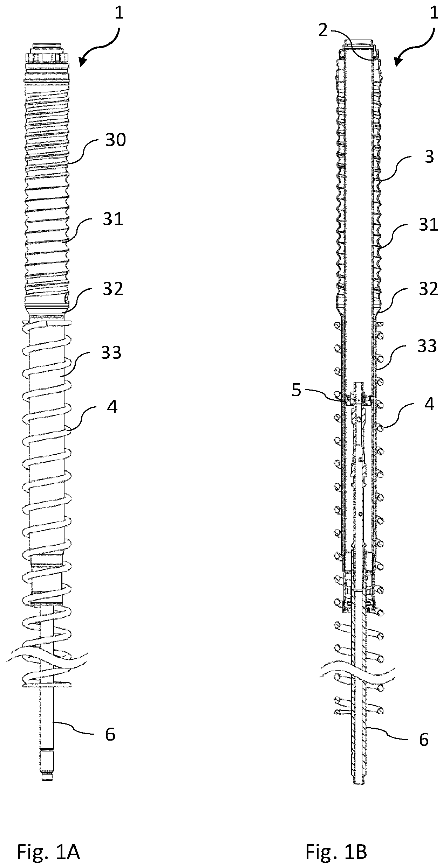

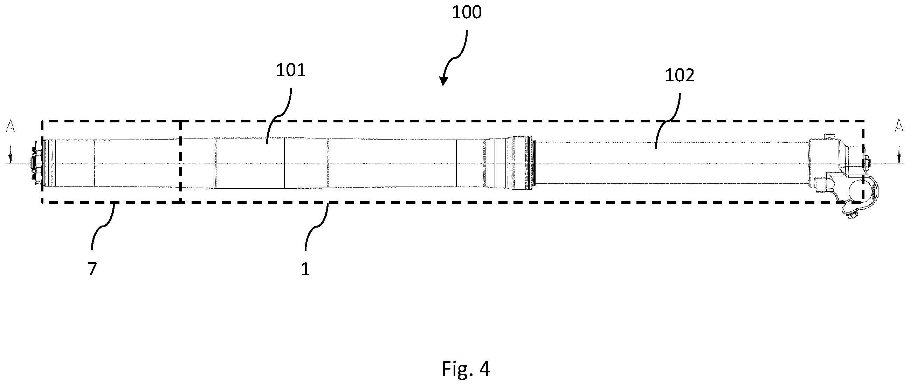

Fig. 1A shows a side view of the damping cartridge system 1 according to one embodiment of the invention. Fig. 1B shows a cross-sectional view of the damping cartridge system 1. The cartridge system 1 is configured to be arranged in a leg of a vehicle front fork, as indicated in Fig. 4, which in particular shows a motocross front fork leg 100. The damping cartridge system 1 comprises an inner cartridge tube 2 (shown in Fig. 1B) which is configured to be coupled to a first part 101 of the vehicle front fork leg 100; a piston head 5 coupled to a second part 102 of the vehicle front fork leg 100 configured to be moveable relative the first part 101 of the vehicle front fork leg 100. The piston head 5 is configured to be moveable inside the inner cartridge tube 2 between a first position and a second position. The damping cartridge system 1 further comprises an outer cartridge tube 3 sized and adapted to at least partly house the inner cartridge tube 2. The outer cartridge tube 3 comprises a plurality of ridges 311 and grooves 312 arranged side-by-side along the axial direction of the outer cartridge tube 3, thereby forming a corrugated portion 31 for distributing radial forces acting on the damping cartridge system 1. The corrugated portion 31 is shown as seen from the side in Fig. 1A and shown in a cross-sectional view in Fig. 1B. The corrugated portion 31 extends from a substantially center portion of the outer cartridge tube 3 towards an axial end of the outer cartridge tube 3.

By this corrugated portion 31, the cartridge system 1 is provided with means for efficiently distributing radial forces acting on the cartridge system 1. This may allow the cartridge system 1 to be realized in a more compact form factor since the geometric shape is beneficial in distributing mechanical stress that otherwise could damage a simple cylindric tube.

As shown in Figs. 1A and 1B, the corrugated portion 31 comprises a helical groove axially extending along the axial direction of the corrugated portion 31. Alternatively, the corrugated portion 31 may comprise independent radial grooves arranged side-by-side along the axial direction of the corrugated portion 31 (not shown).

More particularly, the corrugated portion 31 is adapted with groove depths f1, f2 which vary along the axial direction of the corrugated portion. The groove depths f1, f2 are relatively shallow towards the axial ends of the corrugated portion 31 yet increases towards an intermediate region between the axial ends of the corrugated portion 31. This geometric design is beneficial in distributing radial forces in a more desirable manner. Alternatively, or in combination with this, ridge distances s1, s2 between neighbouring ridges of the corrugated portion 31 may also vary along the axial direction of the corrugated portion 31.

The corrugated portion 31 is substantially even along the axial direction of the corrugated portion. The wall thickness of the corrugated portion 31 is about 0.5-2.5 mm, wherein the thickness is selected depending on whether the corrugated portion should be more durable to withstand stronger radial forces or if it is more paramount to reduce the weight of the cartridge system 1.

In one embodiment, the corrugated portion 31 encompasses the inner cartridge tube 2, at least partly. This may consequently result in the piston head 5, when in the first position, to be located within the corrugated portion 31, yet being fully located outside the corrugated portion 31 when in the second position. The piston head 5 divides the cavity defined by the inner cartridge tube into a compression chamber and a rebound chamber. When the piston head 5 moves from the second position towards the first position, meaning it enters the corrugated portion 31, the piston head 5 may compress the compression chamber. In other words, the piston head 5 makes a compression stroke. When the piston head 5 moves from the first position towards the second position, meaning it moves out of the corrugated portion 31 such that the compression chamber expands while compressing a rebound chamber. In other words, the piston head 5 makes a rebound stroke. Thereby, when the cavity of the inner cartridge tube is filled with operative fluid, the damping cartridge system 1 may provide damping effect to a vehicle front fork via the piston head 5. The piston head 5 may be coupled with the second part of the vehicle front fork by means of a piston rod 6 as shown in Figs. 1A and 1B.

The helical spring 4 may be attached at an axial end to the piston rod 6. The opposite axial end of the helical spring 4 may be configured to abut a fixed point relative the inner cartridge tube 2. This fixed point may be provided by spring abutment means located on the exterior of the outer cartridge tube 3 or a protrusion located in the interior of the first part 101 of the vehicle front fork, e.g. a protrusion. By this, the helical spring 4 may work against a compressive displacement. Alternatively, the helical spring 4 may be configured to attach to a spring attachment means located on the exterior of the outer cartridge tube 3 or in the interior of the first part 101 of the vehicle front fork, by which spring attachment means the helical spring is fixedly attached relative the inner cartridge tube 2. By this, the helical spring may work against a compressive displacement as well as an expansive displacement.

In addition, the damping cartridge system 1 may further comprise a fluid reservoir 7 fluidly connected to either the rebound chamber and/or the compression chamber. The fluid reservoir 7 may be coaxially arranged with the inner cartridge tube 2 at the axial end opposite the axial end through which the piston rod 6 extends.

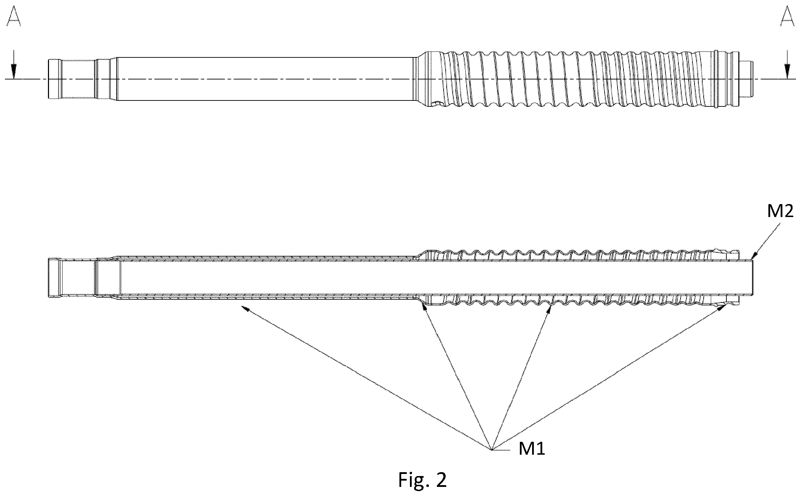

Fig. 2 shows a side view and a cross-sectional view of the inner and outer cartridge tube 2, 3 according to one embodiment of the invention. The corrugated portion 31 is characterized by a first material M1 comprising titanium. In a preferred embodiment, the first material M1 further comprises 2-3% vanadium and/or 2.5-3.5% aluminum. In addition to this, the whole outer cartridge tube 3 may be formed by the same first material M1 as shown in Fig. 2. The inner cartridge tube 2 is characterized by a second material M2 comprising aluminum. The choice of material of the corrugated portion 31, the whole outer cartridge tube 3, and the inner cartridge tube 2 as mentioned above are advantageous for providing a durable cartridge system that may be embodied in a more compact form factor.

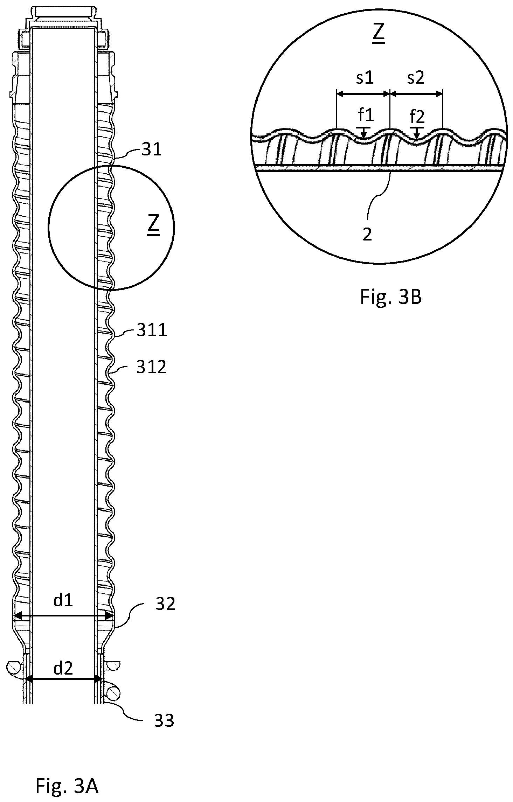

Fig. 3A shows a cross-sectional view of a portion of the inner and outer cartridge tube according to one embodiment of the invention As shown, the outer cartridge tube 3 comprises a plurality of ridges 311 and grooves 312 arranged side-by-side along the axial direction of the cartridge tube 3, thereby forming the above-mentioned corrugated portion 31. Fig. 3B shows a zoomed in view Z of the corrugated portion 31 of the outer cartridge tube 3 according to one embodiment of the invention. The grooves 312 may be characterized in terms of groove depths f1, f2 which are measured as the distance to the bottom of the groove 312 from the tip of neighboring ridges 311. Moreover, ridge distances s1, s2 may be defined as the distance between neighboring ridges 311. Using the ridge distances and the groove depths, it is possible to define a ratio between the two. The ratio profile may be successively larger towards the axial ends of the corrugated portion 31 as measured from an intermediate region wherein the ratio has a minimum. This geometric shape may be advantageous in distributing radial forces acting on the damping cartridge system in an efficient manner.

The outer cartridge tube 3 comprises in addition to the corrugated portion 31 a spring receiving portion 33 axially offset from the corrugated portion 31, see e.g. Fig. 1A or 3A. Both the corrugated portion 31 and the spring receiving portion 33 are substantially cylinder shaped and are characterized respectively by a first diameter d1 and a second diameter d2 smaller than said first diameter d1. When the damping cartridge system 1 is arranged in a vehicle front fork leg, the reduced diameter of the spring receiving portion 33 allows for an increased space allocation for the helical spring 4. This is possible since the corrugated portion 31 is present to efficiently distribute radial forces acting on the damping cartridge system 1, which consequently allows for the spring receiving portion to be subjected to reduced mechanical stress induced by radial forces, consequently the spring receiving portion 33 may be reduced in diameter. In order to maintain durability to withstand mechanical stress, the spring receiving portion may be made from said first material M1.

The outer cartridge tube 3 further comprises a conical portion 32 connecting the corrugated portion and the spring receiving portion 33. This particular geometric shape allows for more evenly distributed mechanical stress along this transition between the corrugated portion 31 and the spring receiving portion 33.

Fig. 4 shows a vehicle front fork leg 100 for a vehicle according to one embodiment of the invention. In particular, the vehicle may be a motocross. The vehicle front fork leg 100 comprises a first part 101 and a second part 102 configured to be moveable relative the first part 101. As shown in Fig. 4, the first part 101 and the second part 102 are telescopically moveable relative each other. Within said vehicle front fork leg 100, a damping cartridge system 1 according to the first aspect of the invention, or any embodiments thereof, is arranged. Moreover, the vehicle front fork leg is extended axially along axis A so as to house a fluid reservoir 7 fluidly connected to the damping cartridge system 1. This extended portion is however optional if a shorter vehicle front fork leg is desired.

Thus, when the vehicle front fork leg 100 compresses, which movement is counteracted by the helical spring 4, the piston head 4 moves further into the inner cartridge tube 2. If the vehicle front fork leg is also bent away from said axis A, for instance whenever a vehicle comprising said vehicle front fork leg 100 makes ground contact, the corrugated portion 31 within said vehicle front fork leg 100 absorbs and distributes the radial forces acting on the damping cartridge system induced by said bending motion of the vehicle front fork leg 100. Since the corrugated portion 31 is present, the damping cartridge system 1 may as explained previously be provided in a more compact form factor, which allocates more space to the helical spring 4. Moreover, due to the larger allocated space, the helical spring 4 is not as likely to be pinched within said vehicle front fork leg 100 between the first or second part 101, 102 of the vehicle front fork leg 100 and the outer cartridge tube 3, thereby improving damping characteristics. For additional protection, spring protection means may be arranged on the surface of the outer cartridge tube 3.

Also, as indicated previously, a vehicle, in particular a motocross, may comprise said vehicle front fork and a damping cartridge system 1 according to the first aspect of the invention or any embodiments thereof, which damping cartridge system 1 is arranged in a leg of said vehicle front fork, and the helical spring 4 configured to counteract the movement of the piston head 5 when moved between the first and second position. Said helical spring 4 may then be arranged such that the spring receiving portion 33 of the outer cartridge tube 3 is arranged at least partly inside said helical spring 4. By this, a vehicle, in particular a motocross, with improved damping characteristics may be achieved. Said vehicle may also be more durable and/or more lightweight.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. Damping cartridge system (1) configured to be arranged in a leg (100) of a vehicle front fork, the damping cartridge system (1) comprising:
- an inner cartridge tube (2) configured to be coupled to a first part (101) of the vehicle front fork leg (100),
- a piston head (5) coupled to a second part of the vehicle front fork leg configured to be moveable relative the first part of the front fork leg, the piston head (5) configured to be moveable inside the inner cartridge tube (2) between a first position and a second position,
- an outer cartridge tube (3) sized and adapted to at least partly house the inner cartridge tube (2),
**characterized in that**
the outer cartridge tube (3) comprises a plurality of ridges (311) and grooves (312) arranged side-by-side along the axial direction of the outer cartridge tube (3), thereby forming a corrugated portion (31) for distributing radial forces acting on the damping cartridge system (1).

2. Damping cartridge system (1) according to claim 1, wherein at least two grooves (32) of the corrugated portion (31) have groove depths (f1, f2) which are different.

3. Damping cartridge system (1) according to claim 2, wherein the groove depths (f1, f2) of the corrugated portion (31) varies along the axial direction of the corrugated portion (31).

4. Damping cartridge system (1) according to any preceding claims, wherein ridge distances (s1, s2) between neighboring ridges (311) of the corrugated portion (31) varies along the axial direction of the corrugated portion (31).

5. Damping cartridge system (1) according to any preceding claims, wherein the corrugated portion (31) comprises a helical groove axially extending along the axial direction of the corrugated portion (31) and/or independent radial grooves arranged side-by-side along the axial direction of the corrugated portion (31).

6. Damping cartridge system (1) according to any preceding claims, wherein the wall thickness of the corrugated portion (31) is substantially even along the axial direction of the corrugated portion (31).

7. Damping cartridge system (1) according to claim 6, wherein the wall thickness of the corrugated portion (31) is about 0.5-2.5 mm.

8. Damping cartridge system (1) according to any preceding claims, wherein the corrugated portion (31) is arranged such that the piston head (5), when in the first position, is located within the corrugated portion (31), and, when in the second position, is located fully outside the corrugated portion (31).

9. Damping cartridge system (1) according to any preceding claims, wherein the corrugated portion (31) is made of a first material comprising titanium, the first material preferably further comprising 2-3% vanadium and/or 2.5-3.5% aluminum.

10. Damping cartridge system (1) according to claim 9, wherein the whole outer cartridge tube (3) is made from the first material comprising titanium.

11. Damping cartridge system (1) according to any preceding claims, wherein the inner cartridge tube (2) is made from a second material comprising aluminum, the second material preferably comprising 95-98% aluminum.

12. Damping cartridge system (1) according to any preceding claims, wherein the outer cartridge tube (3) comprises a spring receiving portion (33) axially displaced from the corrugated portion (31), said spring receiving portion adapted for receiving the helical spring when arranged to the cartridge system, wherein the corrugated portion (31) has a first diameter (d1) and the spring receiving portion (33) has a second diameter (d2) smaller than said first diameter (d1).

13. Damping cartridge system (1) according to any of claims 11-12, wherein the outer cartridge tube (3) comprises a conical portion (32) connecting the corrugated portion (31) and the spring receiving portion (33).

14. Damping cartridge system (1) according to any of claims 11-13, comprising spring protection means arranged on the outside of the spring receiving portion (33).

15. Vehicle comprising: a vehicle front fork, a damping cartridge system (1) according to any of claims 1-14 arranged in a leg of said vehicle front fork, and a helical spring (4) configured to counteract the movement of the piston head (5) when moved between the first and second position, said helical spring (4) arranged such that the spring receiving portion (33) of the outer cartridge tube (3) is arranged at least partly inside said helical spring (4).
